# DEMANDE DE BREVET EUROPEEN

(11) **EP 4 560 551 A1**
(43) Date de publication de la demande: **28.05.2025**
(21) Numéro de dépôt: 23307058.0
(22) Date de dépôt: 27.11.2023
(51) Int. Cl.: G06Q 10/0631, G09B 7/02

(54) **PROCÉDÉ DE DÉTERMINATION DE COMPÉTENCES NON TECHNIQUES D'UN SUJET MIS EN OEUVRE PAR ORDINATEUR, PRODUIT PROGRAMME PERMETTANT LA MISE EN OEUVRE D'UN TEL PROCÉDÉ ET SUPPORT D'ENREGISTREMENT STOCKANT UN TEL PROGRAMME**

(71) Demandeur: Simonet, Angélique, 06560 Valbonne (FR)
(72) Inventeur: Simonet, Angélique, 06560 Valbonne (FR)
(74) Mandataire: Tranvouez, Edern Morgan

(57) **Abrégé**

L'invention concerne un procédé de détermination de compétences non techniques d'un sujet mis en oeuvre par ordinateur, lesdites compétences techniques pouvant être qualifiées à partir de valeurs de caractéristiques du sujet. Le procédé de détermination comprenant les étapes suivantes : soumission du sujet à un questionnaire à choix multiples comprenant une pluralité de questions chacune relative à au moins l'une des caractéristiques du sujet, et détermination automatisée, à partir de réponses données par le sujet aux questions, des valeurs des caractéristiques du sujet. Les choix multiples de chaque question sont à base d'échelles impaires, et lors de l'étape de détermination automatisée, il est prévu pour au moins une caractéristique du sujet, un seuil de valeur et une condition relative audit seuil de valeur de telle manière que lorsque ladite caractéristique du sujet remplit la condition relative audit seuil une correction est appliquée à au moins une autre caractéristique du sujet.

## Description

### Domaine technique

L'invention concerne les procédés de et en particulier les procédés de détermination de compétence non technique d'un tel sujet.

L'invention concerne plus précisément un procédé détermination de compétences non techniques d'un sujet mis en oeuvre par ordinateur, un produit programme permettant la mise en oeuvre d'un tel procédé, un support d'enregistrement stockant un tel programme et un système de détermination de compétences non techniques.

### État de l'art antérieur

Afin de favoriser l'épanouissement personnel et professionnel et permettre une bonne intégration professionnelle, il peut être utile de mieux se connaître et savoir quels sont ses points forts et ses points faibles relatifs aux savoir être. De même, pour un employeur, ou un encadrant, cette connaissance concernant les membres de leurs équipes peut également être primordiale afin de réduire les risques de conflits et obtenir une bonne coopération au sein desdites équipes. C'est dans ce but qu'ont été développés les procédés de déterminations de compétences non-techniques (ou compétences comportementales)

On notera qu'il a été choisi, ci-dessus et dans le reste de ce document, la terminologie de « compétences non-techniques » afin de qualifier les compétences relatives au savoir être. Bien entendu, en alternative, il est parfaitement possible de substituer cette terminologie « compétences non-techniques » par « compétences comportementales » sans que l'on sorte du cadre de l'invention.

De tels procédés sont généralement basés sur des questionnaires à choix multiples ou binaires afin de pouvoir caractériser les compétences non-techniques d'un sujet. Après soumission du sujet au questionnaire, un traitement des réponses obtenues permet de qualifier les caractéristiques des compétences non-techniques dudit sujet.

Si de tels procédés peuvent permettre à un sujet de qualifier ses compétences non-techniques et ainsi savoir comment les améliorer afin de mieux s'épanouir dans ses fonctions, ces procédés ne sont pas parfaitement adaptés.

En effet, les questionnaires sur lesquels ces procédés sont basés peuvent entraîner des biais et, de ce fait, ne pas fournir le résultat escompté. De plus, les valeurs de caractéristiques déterminées à partir de tels questionnaires sont brutes et ne prennent généralement pas en compte leurs interdépendances.

Ainsi, au moins une partie des sujets pour lesquels de tels procédés sont mis en oeuvre se retrouve avec un résultat ne reflétant que partiellement leurs compétences non-techniques et le bénéfice des connaissances que pourrait apporter l'utilisation d'un tel procédé s'en trouve amoindri. Bien entendu, il est possible de corriger une partie de ces inconvénients ci-dessus par une lecture des résultats par un expert dans le domaine des compétences non-techniques. Si cette possibilité permet une prise en compte de l'interdépendance de certaines valeurs de caractéristiques et donc corriger une partie des biais liée à ces procédés, une telle intervention se fait au détriment des possibilités d'automatisation de tels procédés.

Il y aurait donc un intérêt à rendre plus fiable et plus précis de tels procédés de manière à permettre une complète automatisation de ces procédés et d'éviter la nécessité d'intervention d'un expert.

### Exposé de l'invention

L'invention vise à répondre au moins en partie aux problèmes mentionnés ci-dessus et a ainsi pour but la fourniture d'un procédé de détermination de compétences non techniques d'un sujet mis en oeuvre par ordinateur qui fournisse des résultats fiables sans nécessiter l'intervention d'un expert.

A cet effet, l'invention concerne un procédé de détermination de compétences non-techniques d'un sujet mis en oeuvre par ordinateur, lesdites compétences techniques pouvant être qualifiées à partir de valeurs de caractéristiques du sujet, le procédé de détermination comprenant les étapes suivantes :
A. soumission du sujet à un questionnaire à choix multiples comprenant une pluralité de questions chacune relative à au moins l'une des caractéristiques du sujet,
B. détermination automatisée, à partir de réponses données par le sujet aux questions, des valeurs des caractéristiques du sujet,
   dans lequel, lors de la soumission du sujet au questionnaire, les choix multiples de chaque question sont à base d'échelles impaires, et dans lequel lors de l'étape de détermination automatisée, il est prévu pour au moins une caractéristique du sujet, un seuil de valeur et une condition relative audit seuil de valeur de telle manière que lorsque ladite caractéristique du sujet rempli la condition relative audit seuil une correction est appliquée à au moins une autre caractéristique du sujet.

Par choix multiples à base d'échelles impaires, il est entendu, ici et dans le reste de ce document, que les choix multiples présentent une pluralité de choix incluant un choix neutre, c'est-à-dire pour lequel le sujet n'a ni à approuver, ni à désapprouver le choix donné par la question. Un exemple d'échelle impaire sont les échelles de Likert.

Un tel procédé, en offrant au sujet des choix multiples lors de la réponse aux questions, permet d'éviter les biais et permet au sujet de pleinement exprimé son degré d'accord ou désaccord, tout en offrant au sujet la possibilité d'exprimer le fait qu'il n'a aucun avis vis-à-vis de cette question. Cela permet d'éviter les « biais de réponse ». On notera également qu'une telle possibilité de réponse « neutre » est également significatif en ce qui concerne les compétences non-techniques du sujet, puisqu'un grand nombre de réponse « neutre » peut refléter une compétence « polyvalente » du sujet.

De plus, le fait de prévoir avec un tel procédé des seuils de valeur et des conditions associées pour corriger les valeurs de caractéristiques du sujet permet de prendre en compte de manière automatisée l'interdépendance que peuvent avoir certaines de ces caractéristiques. De ce fait, il est donc possible d'obtenir à partir du procédé selon l'invention un résultat fiable sans nécessiter la lecture d'un expert afin de prendre en compte l'interdépendance entre les caractéristiques et pour éventuellement corriger les biais que présentent les procédés de l'art antérieur.

L'étape de qualification automatisée peut comprendre les sous-étapes suivantes :
B3. quantification du nombre de réponse du sujet aux questions correspondant à un choix neutre,
B4. si le nombre de réponse du sujet aux questions correspondant à un choix neutre est supérieur ou égale, voire strictement supérieur, à un nombre seuil de choix neutre, détermination que le sujet présente une caractéristique du type « polyvalence ».

Ainsi, avec ses sous-étapes, le procédé selon l'invention permet d'adresser une caractéristique « polyvalence » qui n'est pas adressé par les procédés de l'art antérieur. Or cette caractéristique est particulièrement importante à prendre en compte pour les sujets la présentant puisqu'elle influence de manière importante

Il peut en outre être prévu une étape C. de fourniture de résultats de la détermination automatisée des valeurs des caractéristiques du sujet, dans lequel ladite fourniture de résultats comprend au moins l'une parmi :
(i) une indication d'une partie des caractéristiques, lesdites caractéristiques indiquées étant celles présentant les valeurs les plus importantes, chaque caractéristique indiquée étant préférentiellement accompagnée d'une information relative à la valeur déterminée pendant l'étape B. de détermination automatisée,
(ii) une indication de chacune des caractéristiques du sujet associée à une information relative à la valeur déterminée pendant l'étape B. de détermination automatisée,
(iii) une indication, déterminée à partir des caractéristiques du sujet, de propositions d'amélioration pour le sujet.

De cette manière, les résultats fournis au sujet peuvent être adapté à ses besoins, à savoir une version simple (i) lorsqu'il a besoin d'un résumé de ses résultats, une version complète (ii) lorsqu'il souhaite pleinement vouloir analyser ses compétences non techniques, et des propositions d'amélioration (iii) lorsqu'il souhaite utiliser le procédé selon l'invention afin d'identifier ses axes d'amélioration. Bien entendu, les résultats peuvent combiner certains parmi ces éléments, voir l'ensemble de ces éléments afin de permettre au sujet de consulter la ou les parties de ces résultats qui l'intéresses.

Il peut en outre être prévu une étape D. de délivrance d'un identifiant associé au sujet et/ou au résultat de la détermination automatisée à l'étape B., et dans lequel il est prévu une étape E. fourniture de l'accès à au moins une partie des résultats de la détermination automatisée des valeurs des caractéristiques du sujet et/ou des réponses fournies par le sujet au questionnaire à choix multiples lors de la soumission dudit identifiant.

De cette manière, le sujet est à même :
- de facilement partager ses résultats, de manière certifiée du fait de cet identifiant, avec un éventuel futur employeur, ou encore,
- partager les différents éléments de réponse qu'il a donné dans le cadre de l'étape A afin de permettre une expertise complémentaire, par exemple par un thérapeute, de ses compétences non-technique, ceci encore de manière certifiée du fait de cet identifiant.

En complément à cette possibilité, la fourniture d'accès de l'étape E. peut être associé avec une date de validité des résultats du procédé, les résultats n'étant alors plus accessible après le passage de cette date de validité.

Une telle possibilité permet de s'assurer pour les personnes, telles qu'un éventuel futur employeur, de s'assurer que les résultats consultés ne soient pas obsolètes et qu'ils reflètent parfaitement les compétences non-techniques actuelles du sujet.

L'identifiant peut être délivré sous la forme d'un code graphique, tel qu'un code-barres à une ou deux dimensions, ledit identifiant étant préférentiellement un code-barres à deux dimensions du type code QR.

Un tel code graphique, en particulier un code à deux dimensions, facilite le partage et donc la consultation des résultats et/ou l'accès aux éléments de réponse du sujet. Ainsi, le sujet peut par exemple aisément ajouter un tel identifiant à son curriculum vitae.

Lors de la fourniture de l'accès à au moins une partie des résultats et/ou des réponses peut se faire au travers d'une page internet et/ou une application mobile.

Une telle possibilité permet une consultation facilitée puisqu'elle peut se faire à partir d'un simple ordinateur ou appareil connecté tel qu'une tablette tactile ou téléphone intelligent.

L'invention concerne en outre un produit programme comprenant du code information configuré pour mettre en oeuvre les étapes d'un procédé de détermination selon l'invention, le produit programme comportant des instructions pour réaliser les étapes suivantes :
A. soumission du sujet à un questionnaire à choix multiples comprenant une pluralité de questions chacune relative à au moins l'une des caractéristiques du sujet,
B. détermination automatisée, à partir de réponses données par le sujet aux questions, des valeurs des caractéristiques du sujet,
dans lequel, lors de la soumission du sujet au questionnaire, les choix multiples de chaque question sont à base d'échelles impaires, et dans lequel lors de l'étape de détermination automatisée, il est prévu pour au moins une caractéristique du sujet, un seuil de valeur et une condition relative audit seuil de valeur de telle manière que lorsque ladite caractéristique du sujet remplit la condition relative audit seuil une correction est appliquée à au moins une autre caractéristique du sujet.

Un tel produit programme permet la mise en oeuvre d'un procédé selon 'l'invention et de bénéficier des avantages qui y sont associés.

L'invention concerne en outre un support d'enregistrement informatique lisible par un ordinateur stockant le produit programme selon l'invention.

Un tel support permet l'installation d'un produit programme selon l'invention sur un ordinateur et la mise en oeuvre du procédé selon l'invention à partir de cet ordinateur. De ce fait, il permet également d'obtenir les avantages qui sont associés au du procédé selon l'invention.

L'invention concerne également un système de détermination de compétences non techniques d'un sujet mis en oeuvre par ordinateur, lesdites compétences techniques pouvant être qualifiées à partir de valeurs de caractéristiques du sujet, Le système de détermination comprenant un serveur configurer pour :
- fournir les instructions à un ordinateur secondaire pour soumettre le sujet à un questionnaire à choix multiples comprenant une pluralité de questions chacune relative à au moins l'une des caractéristiques du sujet,
- récupération auprès de l'ordinateur secondaire des réponses données par le sujet aux questions et détermination automatisée, à partir desdites réponses, des valeurs des caractéristiques du sujet.
dans lequel, lors de la soumission du sujet au questionnaire, les choix multiples de chaque question sont à base d'échelles impaires, et dans lequel lors de l'étape de détermination automatisée, il est prévu pour au moins une caractéristique du sujet, un seuil de valeur et une condition relative audit seuil de valeur de telle manière que lorsque ladite caractéristique du sujet remplit la condition relative audit seuil une correction est appliquée à au moins une autre caractéristique du sujet.

Un tel système permet la mise en oeuvre d'un procédé selon 'l'invention et de bénéficier des avantages qui y sont associés.

### Brève description des dessins

La présente invention sera mieux comprise à la lecture de la description d'exemples de réalisation, donnés à titre purement indicatif et nullement limitatif, en faisant référence aux dessins annexés sur lesquels :
- la figure 1 illustre un ordinogramme d'un procédé de détermination de compétences non techniques d'un sujet selon l'invention
- la figure 2 illustre un système de détermination de compétences non techniques selon l'invention, ledit système comprenant un serveur apte à communiquer avec un ordinateur secondaire.

Des parties identiques, similaires ou équivalentes des différentes figures portent les mêmes références numériques de façon à faciliter le passage d'une figure à l'autre.

Les différentes parties représentées sur les figures ne le sont pas nécessairement selon une échelle uniforme, pour rendre les figures plus lisibles.

Les différentes possibilités (variantes et modes de réalisation) doivent être comprises comme n'étant pas exclusives les unes des autres et peuvent se combiner entre elles.

### Exposé détaillé de modes de réalisation particuliers

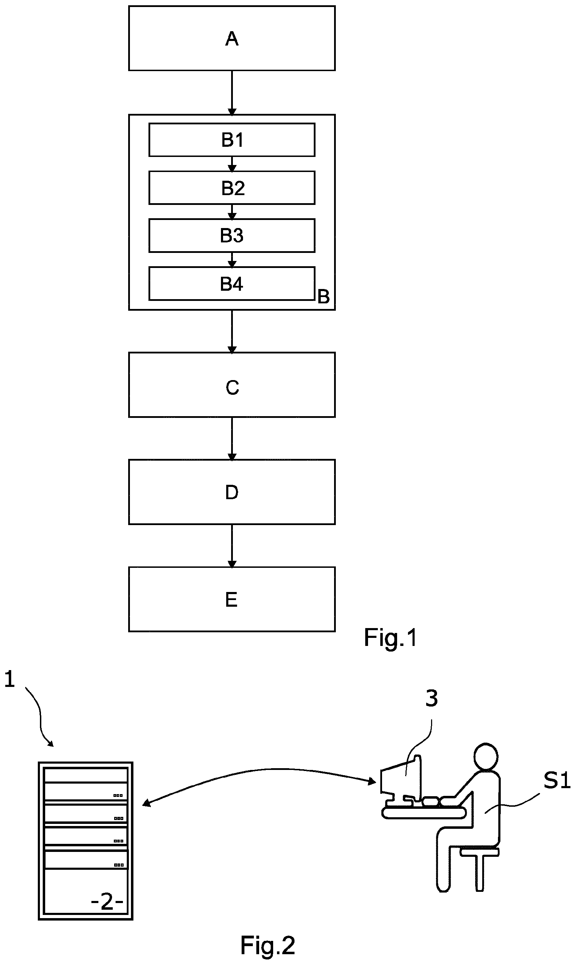

La figure 1 illustre un ordinogramme d'un procédé de détermination de compétences non techniques mise en oeuvre par ordinateur selon l'invention. Un tel procédé permet, d'une manière automatisée, de quantifier les compétences non-techniques d'un sujet. Ce procédé peut être mis en oeuvre à la demande du sujet souhaitant mieux connaître ses compétences non-techniques ou à la demande d'un commanditaire, tel qu'un employeur, un supérieur, un recruteur, un consultant, un coach ou un thérapeute ayant besoin d'identifier les compétences non-techniques du sujet afin de permettre son intégration au sein d'une équipe et/ou d'une société.

Pour ce faire, un tel procédé est basé sur le fait que de telles compétences non-techniques peuvent généralement être qualifiées par différentes caractéristiques du sujet qui sont quantifiables. Ainsi par exemple, ces caractéristiques peuvent être, sans que cela soit limitatif, la communicabilité, la loyauté, l'autonomie, la performance... Bien entendu, ces exemples de caractéristiques sont fournis qu'à titre d'illustration et peuvent être tout autre, en fonction de l'objectif du procédé, ceci sans que l'on sorte du cadre de l'invention.

On notera en particulier, que la présente invention peut s'appliquer à tout type de qualification de compétences non-techniques, ainsi par exemple et en particulier, la présente invention peut s'appliquer aux méthodes se basant sur (et/ou découlant de) les travaux de Lewis Goldberg (également connue sous la terminologie anglaise « Big Five), les travaux du psychanalyste Jung, l'approche systémique de l'école Palo Alto et/ou le Riasec de Holland, de la méthodologie « Process com », les travaux de Meredith Belbin et/ou de l'Indicateur Typologique de Myers-Briggs.

Un tel procédé comporte ainsi les étapes suivantes :
A. soumission du sujet à un questionnaire à choix multiples comprenant une pluralité de questions chacune relative à au moins l'une des caractéristiques du sujet,
B. détermination automatisée, à partir de réponses données par le sujet aux questions, des valeurs des caractéristiques du sujet,
C. fourniture de résultats de la détermination automatisée des valeurs des caractéristiques du sujet.

Selon les spécificités de l'invention :
- lors de la soumission du sujet au questionnaire, à l'étape A, les choix multiples de chaque question sont à base d'échelles impaires, et
- lors de l'étape de détermination automatisée, il est prévu pour au moins une caractéristique du sujet, un seuil de valeur et une condition relative audit seuil de valeur de telle manière que lorsque ladite caractéristique du sujet rempli la condition relative audit seuil une correction est appliquée à au moins une autre caractéristique du sujet.

On notera bien entendu que ci-dessus, et dans le reste de ce document, le terme « question » doit être entendu de manière large, en y incluant bien entendu les questions en tant que telles mais également les affirmations, propositions, ou expressions pour laquelle un choix du sujet, tel qu'une approbation ou une désapprobation, est attendu.

De même, il est utilisé dans le présent document, ceci sans réelle distinction et de manière interchangeable, les termes « choix » et « réponse » pour définir les choix accessibles au sujet pour une question donnée et pour la réponse en tant que telle donnée par le sujet à cette même question.

Une telle échelle impaire permet, par la présence d'un niveau central, au sujet de n'exprimer aucun avis vis-à-vis de la question et donc d'éviter un « biais de réponse » lorsque ce dernier doit nécessairement se prononcer vis-à-vis de ladite question. Pour ce faire, les choix peuvent par exemple être d'un type sélectionné parmi :
(i) une plage d'opinions, telle qu'une « échelle de satisfaction » vis-à-vis de la question allant de l'approbation totale à la désapprobation totale en incluant une réponse neutre, selon le principe des échelles de Likert ;
(ii) un choix de pourcentages d'approbation ou non de l'affirmation associée à la question, incluant une réponse neutre à 50% ;
(iii) une réponse libre à partir d'un pourcentage d'approbation, le sujet précisant à quel pourcentage il approuve ou non l'affirmation associée à la question, le fait que la réponse neutre à 50% soit possible devant alors être clairement indiqué au sujet.

On notera que si la possibilité (iii) n'est généralement pas considérée comme un choix multiple, cela est, dans les fait, bien un choix multiple, puisque le sujet à le choix entre 101 valeurs allant de 0 à 100, les valeurs 0 et 100 incluses.

Ainsi selon la possibilité (i), les différentes opinions accessibles peuvent être par exemple :
- « Très satisfait(e) », « Plutôt satisfait(e) », « Ni satisfait(e) ni insatisfait(e) » (réponse neutre), « Plutôt insatisfait(e) » et « Très insatisfait(e) »
- ou encore « Tout à fait d'accord », « J'accepte », « Ni d'accord, ni pas d'accord » (réponse neutre), « Pas d'accord », « Pas du tout d'accord ».

Selon la possibilité (ii), le choix multiple peut être introduit sous la forme d'un choix d'un pourcentage d'approbation vis-à-vis de l'affirmation associée à la question considérée ceci dans une liste prédéfinie de pourcentages d'approbation, 0% correspondant à « Pas du tout d'accord », 100% à « Tout à fait d'accord », et 50% « Ni d'accord, ni pas d'accord », les choix étant alors 0% ; 25% ; 50% (réponse neutre), 75% et 100%.

Bien entendu dans les trois exemples ci-dessus, il a été choisi un nombre de choix de 5, bien entendu ce nombre peut être différent (par exemple 3 ou 7) sans que l'on sorte du cadre de l'invention, tant que ces choix incluent, conformément au principe d'« échelle impaire », une réponse neutre.

Selon la possibilité (iii), le choix multiple peut être introduit sur la base de l'indication d'un pourcentage d'approbation vis-à-vis de l'affirmation associée à la question considérée, 0% correspondant à « Pas du tout d'accord », 100% à « Tout à fait d'accord », et 50% « Ni d'accord, ni pas d'accord », le sujet étant alors invité à indiquer le pourcentage lui correspondant.

On notera que pour faciliter le traitement, comme cela est décrit ci-après dans le cadre de l'exemple du tableau 1, les réponses données peuvent être quantifiées en valeur numérique, une désapprobation totale correspondant à la valeur 0, une approbation totale à la valeur 4, une réponse neutre à la valeur 2. Sur cette base, il est possible d'élaborer des questions correspondant à chaque caractéristique du sujet et de quantifier chaque caractéristique par une simple somme des valeurs obtenues pour les questions correspondantes.

Conformément à l'invention et comme indiqué plus haut, pour certaines caractéristiques du sujet, il est prévu au moins un seuil de valeur et une condition associée audit seuil de telle manière que lorsque ladite caractéristique du sujet remplit la condition relative audit seuil de valeur une correction est appliquée à au moins une autre caractéristique du sujet. Une telle condition peut être :
- la valeur de ladite caractéristique du sujet est supérieure ou égale audit seuil de valeur,
- la valeur de ladite caractéristique du sujet est strictement supérieure audit seuil de valeur,
- la valeur de ladite caractéristique du sujet est inférieure ou égale audit seuil de valeur,
- la valeur de ladite caractéristique du sujet est strictement inférieure audit seuil de valeur,
- la valeur de ladite caractéristique du sujet est comprise entre ledit seuil de valeur et un deuxième seuil de valeur (ceci en incluant ou non l'égalité avec l'un ou lesdits seuils de valeur).

Ainsi avec de telles conditions, il est possible de prendre en compte les interactions entre les caractéristiques du sujet.

A titre d'exemple, les caractéristiques étant par exemple quantifiées sur la base de 4 questions selon un choix multiple du type (ii) tel qu'explicité ci-dessus (valeur comprise entre 0 et 4) avec une valeur maximale par caractéristique de 16, une valeur de caractéristique supérieure ou égale à 12 concernant la communication peut entraîner une bonification d'un point de la caractéristique « esprit d'équipe » alors que, au contraire, si cette même valeur de la caractéristique communication est inférieure ou égale à 4, peut entraîner une diminution d'un point de la caractéristique « esprit d'équipe ».

Bien entendu, ces seuils de valeurs, conditions et les corrections apportées lorsque ces conditions sont remplies dépendent de la méthode de qualification de compétences non-techniques sur laquelle est basée le présent procédé et l'homme du métier, spécialiste du domaine des méthodes de qualification de compétences non-techniques, est à même, sur la base du présent enseignement, de les mettre en place sans faire preuve d'une quelconque activité inventive.

Dans le cadre du présent projet l'étape de détermination automatisée peut ainsi comprendre les sous-étapes suivantes :
B1. détermination à partir des questions d'un valeur associée à chaque caractéristique du sujet,
B2. lorsqu'une ou plusieurs valeurs de caractéristiques du sujet répondent à une condition relative à un seuil de valeur qui leur est associé, correction d'une ou plusieurs autres caractéristiques du sujet,
B3. quantification du nombre de réponses du sujet aux questions correspondant à un choix neutre,
B4. si le nombre de réponse du sujet aux questions correspondant à un choix neutre est supérieur ou égale, voire strictement supérieur, à un nombre seuil de choix neutre, détermination que le sujet présente une caractéristique du type « polyvalence » non adressée par les questions.

Si dans le présent exemple, le questionnaire à choix multiple est choisi pour ne pas adresser la caractéristique du type « polyvalence », il est bien entendu envisageable, sans que l'on sorte de cadre de l'invention, que le questionnaire intègre certaines questions concernant celle-ci. Selon cette possibilité, il est bien entendu envisageable, sans que l'on sorte du cadre de l'invention, que lors de l'étape B4. Le seuil de choix neutre soit déterminé en fonction des réponses données par le sujet aux questions relatives à cette caractéristique du type « polyvalence ».

De même, lorsque cette caractéristique est considérée comme présentée par le sujet, il peut être calculé, à partir du nombre de réponses du sujet aux questions correspondant à un choix neutre et d'éventuellement les réponses données par le sujet aux questions concernant la caractéristique du type « polyvalence ».

Une fois la détermination des valeurs des caractéristiques du sujet réalisée, le résultat de cette détermination est fourni à l'étape C. Ladite fourniture de résultats peut comprendre au moins l'une parmi :
(i) une indication d'une partie des caractéristiques, lesdites caractéristiques indiquées étant celles présentant les valeurs les plus importantes, chaque caractéristique indiquée étant préférentiellement accompagnée d'une information relative à la valeur déterminée pendant l'étape B. de détermination automatisée,
(ii) une indication de chacune des caractéristiques du sujet associée à une information relative à la valeur déterminée pendant l'étape B. de détermination automatisée,
(iii) une indication, déterminée à partir des caractéristiques du sujet, de propositions d'amélioration pour le sujet.

Une telle fourniture peut se faire sous la forme d'un ou plusieurs rapports comprenant une ou plusieurs des indications ci-dessus. Ainsi, il est parfaitement envisageable que dans le cadre du présent procédé, il soit fourni fans à l'étape C un document incluant :
- une entête présentant l'indication (i) de manière à permettre au sujet de l'ajouter à un *curriculum vitae* (CV),
- un corps de document présentant l'indication (ii) afin que le sujet soit à même de prendre connaissance de ces compétences non-techniques,
- une conclusion présentant l'indication (iii).

Bien entendu, en variante ou en complément, la fourniture peut être réalisée selon un format préalablement sélectionné par le sujet (ou le commanditaire du procédé) en y incluant une ou plusieurs des indications (i) à (iii). Afin de permettre au sujet et/ou le commanditaire de partager de manière sécurisée et/ou certifiée les résultats obtenus dans le cadre de la mise en oeuvre du procédé, le procédé peut en outre comprendre les étapes suivantes :
D. de délivrance d'un identifiant associé au sujet et/ou aux résultats obtenus à l'étape C.,
E. fourniture de l'accès à au moins une partie des résultats de la détermination automatisée des valeurs des caractéristiques du sujet et/ou des réponses fournies par le sujet au questionnaire à choix multiples lors de la soumission dudit identifiant.

L'identifiant peut être délivrer sous différente forme, telle qu'une adresse internet, un identifiant, un ensemble identifiant/mot de passe... Selon une possibilité préférée de l'invention, l'identifiant peut être un code graphique, tel qu'un code-barres à une ou deux dimensions, ledit identifiant étant préférentiellement un code-barres à deux dimensions du type code QR. Ainsi dans un exemple de mise en oeuvre, lors de l'étape de C. l'identifiant peut être un code QR incluant une adresse internet renvoyant sur un site internet donnant l'accès à au moins une partie des résultats obtenus dans le cadre de l'étape B, par exemple sous la forme de l'indication (i).

De la même façon, si cette étape D. est ici postérieure à l'étape C, elle peut bien entendu être préalable à l'étape C., voire à l'étape A., la délivrance de l'identifiant du sujet pouvant réalisée préalablement à sa soumission au questionnaire à choix multiples. Il est de même parfaitement envisageable d'avoir une étape D. comprenant les sous-étapes suivantes :
D1. une sous-étape préalable à l'étape A. de fourniture d'un compte utilisateur pour le sujet, associé ou non un mot de passe, et
D2. une sous-étape postérieure à l'étape C. de fourniture d'un identifiant unique, associé au compte utilisateur, et pouvant être utilisé dans le cadre de l'étape E. pour la fourniture de l'accès à au moins une partie des résultats de la détermination automatisée des valeurs des caractéristiques du sujet et/ou des réponses fournies par le sujet au questionnaire à choix multiples.

De même lors de l'étape D., il peut être prévu la délivrance de plusieurs identifiant ceci pour différents usages. Ainsi, par exemple il peut être fourni :
- un premier identifiant donnant accès aux seuls résultats sous la forme (i), par exemple pour permettre l'intégration de cette identifiant à un *curriculum vitae*,
- un deuxième identifiant donnant accès aux résultats complets, par exemple sous la forme (ii) afin de les délivrer à un éventuel futur employeur quand celui-ci souhaite, après avoir consulté les résultats sous la forme (i), l'intégralité des résultats afin de mieux connaître les compétences non-techniques du sujet,
- un troisième identifiant donnant accès à l'ensemble des réponses données par le sujet afin de permettre au sujet de les partager pour obtenir une expertise complémentaire.

Selon une possibilité de l'invention, afin de s'assurer que les résultats partagés sont fiables et actuels, la fourniture d'accès de l'étape E. peut être associé avec une date de validité des résultats du procédé, les résultats n'étant alors plus accessible après que cette date de validité est passée.

On peut noter que lorsqu'il est prévu plusieurs identifiants, tels qu'indiqués ci-dessus, les dates de validité de chacun de ces identifiants peuvent bien entendu être différentes ou même certains, tel que le troisième identifiant, peuvent ne pas être assorti d'une telle date de validité. En effet, un expert est bien entendu à même d'apprécier la validité des données accessibles connaissant la date de soumission du sujet au questionnaire.

Le tableau 1 ci-après fourni un exemple de mise en oeuvre des étapes A. et B. selon l'invention

**Tableau 1 : exemple de mise en oeuvre des étapes A. et B. dans lesquelles 4 caractéristiques (Compétence 1, 2, 3 et 4) ont été examinées pour un Sujet S1 à partir de 16 questions.**

| | | **0%** | **25%** | **50%** | **75%** | **100%** | **50% ?** | **Résultat S1** |
|---|---|---|---|---|---|---|---|---|
| Compétence 1 | Q1 | 0 | 1 | 2 | 3 | 4 | 1 | 3 |
| | Q2 | 0 | 1 | 2 | 3 | 4 | | 4 |
| | Q3 | 0 | 1 | 2 | 3 | 4 | | 2 |
| | Q4 | 0 | 1 | 2 | 3 | 4 | | 4 |
| | | | | | | | Sous Total C1 | 13 |
| | | | | | | | Correction | 1 |
| | | | | | | | Total C1 | 14 |
| | | | | | | | | |
| Compétence 2 | Q5 | 0 | 1 | 2 | 3 | 4 | 1 | 1 |
| | Q6 | 0 | 1 | 2 | 3 | 4 | | 2 |
| | Q7 | 0 | 1 | 2 | 3 | 4 | | 1 |
| | Q8 | 0 | 1 | 2 | 3 | 4 | | 0 |
| | | | | | | | Sous Total C2 | 4 |
| | | | | | | | Correction | -1 |
| | | | | | | | Total C2 | 3 |
| | | | | | | | | |
| Compétence 3 | Q9 | 0 | 1 | 2 | 3 | 4 | 1 | 2 |
| | Q10 | 0 | 1 | 2 | 3 | 4 | | 4 |
| | Q12 | 0 | 1 | 2 | 3 | 4 | 1 | 2 |
| | Q13 | 0 | 1 | 2 | 3 | 4 | | 4 |
| | | | | | | | Sous Total C3 | 12 |
| | | | | | | | Correction | 0 |
| | | | | | | | Total C3 | 12 |
| | | | | | | | | |
| Compétence 4 | Q14 | 0 | 1 | 2 | 3 | 4 | | 4 |
| | Q15 | 0 | 1 | 2 | 3 | 4 | | 3 |
| | Q16 | 0 | 1 | 2 | 3 | 4 | | 4 |
| | Q17 | 0 | 1 | 2 | 3 | 4 | | 4 |
| | | | | | | | Sous Total C4 | 15 |
| | | | | | | | Correction | 1 |
| | | | | | | | Total C4 | 16 |
| | | | | | | | Total 50% | 4 |

Dans le présent exemple, ce sont quatre caractéristiques (compétence 1, 2, 3 et 4) du sujet qui sont évaluées ceci au moyen de 16 questions incluant pour chaque caractéristiques quatre questions dédiées. Bien entendu, comme cela est d'usage, afin d'éviter les biais relatifs à l'ordre des questions, l'ordre des questions est aléatoire lors de l'étape A. de soumission du sujet au questionnaire. Lors de cette soumission, le sujet S1 a le choix pour chacune de ces questions de fournir une indication d'approbation ou de désapprobation sous la forme d'un pourcentage d'approbation à sélectionner parmi 0%, 25%, 50%, 75%, 100%, 50% correspondant à la réponse neutre. Chaque choix est associé à une valeur, 0 pour 0%, 1 pour 25%, 2 pour 50%, 3 pour 75% et 4 pour 100%. Ainsi il est possible d'obtenir pour chaque caractéristique une valeur comprise entre 0 et 16 sur la base des seules réponses aux 16 questions.

Les réponses données aux 16 questions par le sujet sont indiquées dans la colonne « résultat S1 ». On peut voir, par exemple, que pour la première caractéristique (Compétence 1), le sujet S1 approuve la question 1 (réponse à 75%), approuve totalement les questions 2 et 4 (réponse à 100%) et n'approuve ou ne désapprouve pas la question 3 (réponse à 50%). De ce fait, pour la question 1, la compétence 1 présente, avant correction, la valeur de 13 (sous totale 1). Pour les autres caractéristiques, compétences 2 à 4, le sujet obtient, avant correction les valeurs de 4, 12 et 15.

Dans le cadre de la sous-étape B2, deux corrections ont été appliquées :
- la caractéristique « compétence 4 » étant supérieure ou égale à 12, il a été appliqué une bonification de 1 à la caractéristique « compétence 1 », celle-ci prenant donc la valeur de 14, et une diminution de 1 à la caractéristique « compétence 2 », celle-ci prenant donc la valeur de 3,
- la caractéristique « compétence 3 » étant supérieure ou égale à 12, il a été appliqué une bonification de 1 à la caractéristique « compétence 4 », celle-ci prenant donc la valeur de 16.

De plus, conformément à une possibilité de l'invention illustrée par les étapes B3 et B4, pour chacune de ces quatre caractéristiques, il a également été identifié le nombre de réponses neutre (à 50%). On peut s'apercevoir que le sujet a 4 réponses neutres. Selon un exemple de l'invention, le nombre seuil de choix neutre pourrait être de 6. Sur cette base, le sujet S1 est ainsi considéré comme ne présentant pas la caractéristique « polyvalent ».

De ce fait le résultat du présent exemple serait que le sujet S1 présente dans l'ordre hiérarchique les caractéristiques suivantes :
- Compétence 4 avec une valeur de 16 ;
- Compétence 1 avec une valeur de 13,
- Compétence 3 avec une valeur de 12, et
- Compétence 2 avec une valeur de 3.

Ainsi la caractéristique prépondérante du sujet S1 est la compétence 4 et il présente, en tant que caractéristiques secondaires, les compétences 1 et 3. Le sujet S1 ne semble pas présenter la compétence 2.

Dans une première application de l'invention, le présent procédé peut être mis en oeuvre par un unique ordinateur ou d'un unique appareil mobile, tel qu'une tablette ou un téléphone intelligent. Conformément à cette possibilité, le sujet est soumis (étape B) au questionnaire à choix multiple au moyen d'un affichage de l'ordinateur ou, de l'appareil mobile, en y répondant au moyen d'un périphérique d'entrée de l'ordinateur, tel qu'une souris ou un clavier. Une fois le résultat de cette soumission déterminée par le processeur de l'ordinateur ou de l'appareil mobile (étape C), l'ordinateur ou l'appareil mobile est alors à même de fournir ces résultats ceci que ce soit en affichant un document reprenant au moins l'une des indications (i), (ii) et (iii), soit par l'impression de ce document ou soit par une transmission de ce document, par exemple par courriel au sujet ou au commanditaire.

Selon cette possibilité, l'invention concerne ainsi un produit programme comprenant du code information configuré pour mettre en oeuvre les étapes d'un procédé de détermination selon l'invention.

Selon une deuxième application illustrée sur la figure 2, permettant la mise en oeuvre du procédé avec un sujet se trouvant à distance, le procédé peut être mis en oeuvre au moyen d'un système de détermination de compétences non techniques d'un sujet selon l'invention. Un tel système de détermination 1 comprend un ordinateur en tant que serveur. Selon cette possibilité, le serveur 2 est configuré pour :
- fournir les instructions à un ordinateur secondaire 3, ou un appareil mobile tel qu'une tablette ou un téléphone mobile, pour soumettre le sujet S1 à un questionnaire à choix multiples comprenant une pluralité de questions chacune relative à au moins l'une des caractéristiques du sujet S1,
- récupération auprès de l'ordinateur secondaire 3, ou un appareil mobile, des réponses données par le sujet S1 aux questions et détermination automatisée, à partir desdits réponses, des valeurs des caractéristiques du sujet S1.

Cette soumission et cette récupération peuvent être réalisées au moyen d'une page web hébergée par le serveur 2 ou d'une application dédiée apte à communiquée avec le serveur 2. Sur cette base, le sujet S1, lorsqu'il veut mettre en oeuvre le procédé selon l'invention afin d'identifier ses compétences non-techniques, le sujet S1 peut simplement se connecter à la page web hébergée ou de l'application dédiée par le serveur 2 au moyen de l'ordinateur secondaire 3 ou de l'appareil mobile.

Comme l'une des possibilités de transmission évoquée lorsque le procédé est mis en oeuvre sur un unique ordinateur (ou appareil mobile), une fois l'étape de détermination réalisée, le serveur 2 peut être configuré pour fournir les résultats par une transmission, par exemple par courriel, d'un document reprenant au moins l'une des indications (i), (ii) et (iii). Dans le même cadre, conformément aux étapes D. et E. du présent procédé, en même temps que la transmission, ou d'une manière indépendante, par exemple sur requête du sujet S1, le serveur 2 peut être configuré pour fournir l'identifiant associé au sujet et/ou le résultat obtenu à l'étape B. et pour, au moyen par exemple d'une page web ou d'une application dédiée, fournir l'accès à au moins une partie des résultats de la détermination automatisée des valeurs des caractéristiques du sujet lors de la soumission dudit identifiant.

## Revendications

1. Procédé de détermination de compétences non techniques d'un sujet mis en oeuvre par ordinateur, lesdites compétences techniques pouvant être qualifiées à partir de valeurs de caractéristiques du sujet, le procédé de détermination comprenant les étapes suivantes :
A. soumission du sujet à un questionnaire à choix multiples comprenant une pluralité de questions chacune relative à au moins l'une des caractéristiques du sujet,
B. détermination automatisée, à partir de réponses données par le sujet aux questions, des valeurs des caractéristiques du sujet,
dans lequel, lors de la soumission du sujet au questionnaire, les choix multiples de chaque question sont à base d'échelles impaires, et dans lequel lors de l'étape de détermination automatisée, il est prévu pour au moins une caractéristique du sujet, un seuil de valeur et une condition relative audit seuil de valeur de telle manière que lorsque ladite caractéristique du sujet remplit la condition relative audit seuil une correction est appliquée à au moins une autre caractéristique du sujet.

2. Procédé de détermination selon la revendication 1, dans lequel l'étape de qualification automatisée comprend les sous-étapes suivantes :
B3. quantification du nombre de réponse du sujet aux questions correspondant à un choix neutre,
B4. si le nombre de réponse du sujet aux questions correspondant à un choix neutre est supérieur ou égale, voire strictement supérieur, à un nombre seuil de choix neutre, détermination que le sujet présente une caractéristique du type « polyvalence ».

3. Procédé de détermination selon la revendication 1 ou 2, dans lequel il est en outre prévu une étape C. de fourniture de résultats de la détermination automatisée des valeurs des caractéristiques du sujet, dans lequel ladite fourniture de résultats comprend au moins l'une parmi :
(i) une indication d'une partie des caractéristiques, lesdites caractéristiques indiquées étant celles présentant les valeurs les plus importantes, chaque caractéristique indiquée étant préférentiellement accompagnée d'une information relative à la valeur déterminée pendant l'étape B. de détermination automatisée,
(ii) une indication de chacune des caractéristiques du sujet associée à une information relative à la valeur déterminée pendant l'étape B. de détermination automatisée,
(iii) une indication, déterminée à partir des caractéristiques du sujet, de propositions d'amélioration pour le sujet.

4. Procédé de détermination selon la revendication 3, dans lequel lors de l'étape C. de fourniture des résultats de la détermination automatisée des valeurs des caractéristiques du sujet il est fourni un document comprenant chacune des indications (i), (ii) et (iii).

5. Procédé de détermination selon la revendication 1 à 4, dans lequel il est en outre prévu une étape D. de délivrance d'un identifiant associé au sujet et/ou au résultat de la détermination automatisée à l'étape B., et dans lequel il est prévu une étape E. fourniture de l'accès à au moins une partie des résultats de la détermination automatisée des valeurs des caractéristiques du sujet et/ou des réponses fournies par le sujet au questionnaire à choix multiples lors de la soumission dudit identifiant.

6. Procédé de détermination selon la revendication 5, dans lequel l'identifiant est délivré sous la forme d'un code graphique, tel qu'un code-barres à une ou deux dimensions, ledit identifiant étant préférentiellement un code-barres à deux dimensions du type code QR.

7. Procédé de détermination selon la revendication 5 ou 6, dans lequel lors de la fourniture de l'accès à au moins une partie des résultats et/ou des réponses se fait au travers d'une page internet et/ou une application mobile.

8. Produit programme comprenant du code information configuré pour mettre en oeuvre les étapes d'un procédé de détermination selon l'une quelconque des revendications 1 à 7, le produit programme comportant des instructions pour réaliser les étapes suivantes :
C. soumission du sujet à un questionnaire à choix multiples comprenant une pluralité de questions chacune relative à au moins l'une des caractéristiques du sujet,
D. détermination automatisée, à partir de réponses données par le sujet aux questions, des valeurs des caractéristiques du sujet,
dans lequel, lors de la soumission du sujet au questionnaire, les choix multiples de chaque question sont à base d'échelles impaires, et dans lequel lors de l'étape de détermination automatisée, il est prévu pour au moins une caractéristique du sujet, un seuil de valeur et une condition relative audit seuil de valeur de telle manière que lorsque ladite caractéristique du sujet remplit la condition relative audit seuil une correction est appliquée à au moins une autre caractéristique du sujet.

9. Support d'enregistrement informatique lisible par un ordinateur stockant le produit programme selon la revendication 8.

10. Système de détermination de compétences non techniques d'un sujet mis en oeuvre par ordinateur, lesdites compétences techniques pouvant être qualifiées à partir de valeurs de caractéristiques du sujet,
le système de détermination comprenant un serveur configurer pour :
- fournir les instructions à un ordinateur secondaire pour soumettre le sujet à un questionnaire à choix multiples comprenant une pluralité de questions chacune relative à au moins l'une des caractéristiques du sujet,
- récupération auprès de l'ordinateur secondaire des réponses données par le sujet aux questions et détermination automatisée, à partir desdites réponses, des valeurs des caractéristiques du sujet.
dans lequel, lors de la soumission du sujet au questionnaire, les choix multiples de chaque question sont à base d'échelles impaires, et dans lequel lors de l'étape de détermination automatisée, il est prévu pour au moins une caractéristique du sujet, un seuil de valeur et une condition relative audit seuil de valeur de telle manière que lorsque ladite caractéristique du sujet remplit la condition relative audit seuil une correction est appliquée à au moins une autre caractéristique du sujet.
